# EUROPEAN PATENT APPLICATION

(11) **EP 3 219 185 A1**
(43) Date of publication of application: **20.09.2017**
(21) Application number: 17159556.4
(22) Date of filing: 07.03.2017
(51) Int. Cl.: A01B 79/00, E02F 3/00

(54) **OPERATING MACHINE**

(30) Priority: 18.03.2016 JP 2016054625
(71) Applicant: Honda Motor Co., Ltd., Minato-ku, Tokyo 107-8556 (JP)
(72) Inventor: Yamazaki, Nobuo, Saitama, 351-0193 (JP)
(74) Representative: Beder, Jens

(57) **Abstract**

An operating machine (10) includes a machine body (12) including a drive source (11); an operation body (22) selected among plural kind thereof and attachable and detachable with respect to the machine body (12); and a control unit (19) to control the drive source (11), the machine body (12) includes plural sensors to emit detection signal when one operation body (22) selected among the plural kind thereof is attached to the machine body, the plural of kind of operation body includes a detection object detectable by the plural sensors, the detection object is provided at different position of the operation body depending on the kind of the operation body (22), and the control unit (19) to identify the one operation body (22) in accordance with each detection signal received from the plural sensors, and to control the drive source (14) to be in a characteristic suitable for an operation of the one operation body (22) based on an identification result.

## Description

### Technical Field

The present invention relates to an operating machine having an operation body selectable depending on an operation.

Priority is claimed on Japanese Patent Application No. 2016-054625, filed March 18, 2016, the contents of which are incorporated herein by reference.

### Background Art

An operating machine in which a machine body is common while an operation body is configured to be attachable depending on an operation such as cultivating, snow removal or the like is available. Patent Document 1 discloses the prior art related to an operating machine including an operation body configured to be selected among a plurality of kind thereof.

In the art disclosed in the Patent Document 1, an operating machine including a machine body including a drive source, an operation body configured to be attachable and detachable with respect to the machine body and a control unit configured to control the drive source. To each of the plurality of operating bodies, an IC tag in which identification information thereof is written in is attached respectively. To the machine body to which the operation body is attached, an IC tag reader configured to read out the IC tag is attached. When one operation body selected among the plurality of kind thereof is attached to the machine body, the IC tag reader acquires the information of the IC tag and send to the control unit. The control unit identifies the operation body and control the drive source to be in a characteristic suitable for the operation.

Meanwhile, if the IC tag is employed in order to identify a kind of the operation body, the manufacturing cost thereof is higher. In order to reduce the cost, there is an idea, for example, in which the operation body and the machine body is connected by wiring, and the control unit recognizes the connection status of wiring for identifying the operation body. However, connection of a coupler for wiring is necessary at a time of attachment of the operation body, and an attachment operation is complicated. Thus, an operating machine which is capable of identifying the operation body in a simple manner and at a low cost is desired.

### Prior Art Documents

### Patent Documents

Japanese Patent Application, Publication No. 2006-296261

### Summary of Invention

An aspect of the present invention is an operating machine including an operation body configured to be selected among a plurality of kind thereof and possible to identify the operation body in a simple manner and at a low cost.

### Problems to be Solved by the Invention

### Means for Solving the Problems

According to an aspect of the present invention, an operating machine including: a machine body including a drive source; an operation body configured to be selected depending on an operation among a plurality of kind thereof and configured to be attachable with respect to the machine body depending on an operation; and a control unit configured to control the drive source, the machine body includes a plurality of sensors configured to emit detection signal at a time when one operation body selected among the plurality of kind thereof is attached to the machine body, the plurality of kind of operation body includes a detection object configured to be detectable by the plurality of sensors, the detection object is provided at different position of the operation body depending on the kind of the operation body, and the control unit configured to identify the one operation body in accordance with each detection signal received from the plurality of sensors, and configured to control the drive source to be in a characteristic suitable for an operation of the one operation body based on an identification result.

In the operating machine described above, the control unit may be configured to control the drive source to be in a predetermined characteristic in a case where the control unit does not receive the detection signal from the sensors.

In the operating machine described above, the drive source may be an engine, and the control unit may have a control map for each kind of the operation body of the plurality of kind thereof, and configured to control the engine based on the control map.

### Advantageous Effects of Invention

According to the aspect of the present invention, an operating machine includes an operation body configured to be selected among a plurality of kind thereof and configured to be attachable and detachable with respect to the machine body depending on an operation; and a control unit configured to control the drive source, and the control unit identifies the one operation body in accordance with each detection signal received from the plurality of sensors.

Assuming that the sensor is one, a sensor capable of emitting the same number of detection signal as the number of kind of the operation body is necessary. On the other hand, in the aspect of the present invention, it is enough as far as a total number by a combination of detection signal configured to be emitted from each of the plurality of the sensors. That is to say, it is not necessary for each of the sensor making up the plurality of sensors to emit the same number of detection signal as the number of kind of operation body. In this way, it is possible to employ also a sensor of a small number of kind of detection signal, which reduces a cost of the sensors.

What is more, plugging and unplugging of a coupler for wiring at a time of replacing an operation body is not necessary. As it is possible to conduct a replacement of the plurality of kind of operating bodies in a simple manner, an operability of the replacement is high. As described above, it is possible to identify the operation body configured to be selected among a plurality of kind thereof in a simple manner and at a low cost.

According to another aspect of the present invention, the control unit is configured to control the drive source to be in a predetermined characteristic in a case where the control unit does not receive the detection signal from the sensors. That is to say, it is possible to control the drive source assuming such cases as a case in which the operation body does not have a detection object that is detectable by the sensors and a case in which the operation body is not attached to the machine body.

According to another aspect of the present invention, the drive source is an engine, and the control unit has the control map for each kind of the operation body of the plurality of kind thereof, and configured to control the engine based on the control map. In this way, an operator is able to manipulate the operating machine in a range of a suitable driving speed for an operation, and the operability is enhanced.

### Brief Description of Drawings

Fig. 1 is a perspective view showing a cultivator as an operating machine according to an example of the present invention.
Fig. 2 is a perspective view showing the operating machine in which a machine body of the cultivator shown in Fig. 1 is attached with a snow removal blade.
Fig. 3 is a perspective view showing the operating machine in which a machine body of the cultivator shown in Fig. 1 is attached with a carrying table.
Fig. 4 is a diagram for explaining a status of the snow removal blade shown in Fig. 2 before attachment.
Fig. 5 is a diagram for explaining a status of the snow removal blade shown in Fig. 2 already attached.
Fig. 6 is a functional diagram of the operating machine shown in Fig. 1 to Fig. 3.

### Description of Embodiment

Hereinafter, an embodiment of the aspect of the present invention will be described with reference to the accompanying drawings. In the following description, right and left indicate right and left respectively with an operator of the operating machine as a basis, and front and rear indicate front and rear respectively with a traveling direction of the operating machine as a basis. In addition, Fr indicates front, Rr indicates rear, L indicates left of the operator, R indicates right of the operator, Up indicates up and Dn indicates down in the drawings.

### <Example>

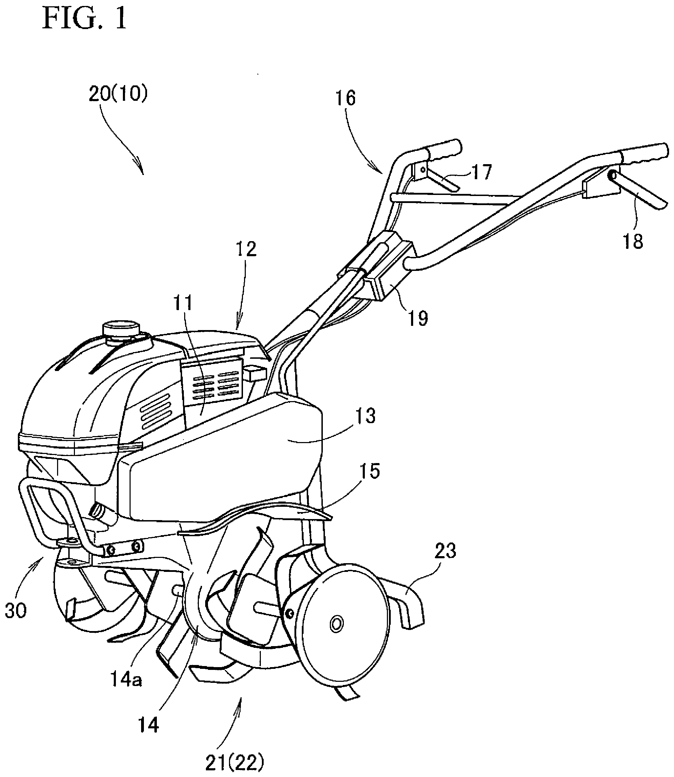

With reference to the Fig. 1, the description is made below. Fig. 1 shows a cultivator 20 as an operating machine 10 according to an example of the present invention. The cultivator 20 includes a machine body 12 including an engine 11 (a drive source 11), a belt cover 13 provided at a side of the engine 11, a transmission 14 provided at lower portion of the machine body 12, a cultivating claw 21 (an operation body 22) provided at an output shaft 14a of the transmission 14 in an attachable and detachable manner, a fender 15 configured to cover the cultivating claw 21 from an upper direction, a resistance rod 23 provided in a rear portion of the machine body 12 in an attachable and detachable manner, a hand grip 16 extending, ascending backward, from a rear portion of the machine body 12, a speed adjustment lever 17 provided at a right side of the hand grip 16, a clutch lever 18 provided at a left side of the hand grip 16, a control unit 19 provided in a center of the hand grip 16 and being configured to control the engine 11, and a machine body side linkage unit 30 provided at a front portion of the machine body 12.

An operator starts the engine 11 by an engine switch provided at the control unit 19 and manipulates the clutch lever 18 and the speed adjustment lever 17 together with the hand grip 16 to conduct cultivating operation. To the machine body 12 of the cultivator 20, it is possible to attach the operation body 22 selected among a plurality of kind depending on an operation and being attachable and detachable. Below, description will be made regarding a status of the operating machine 10 in which the cultivating claw 21 (the operation body 22) is detached from the machine body 12 of the cultivator 20, and another operation body 22 is attached.

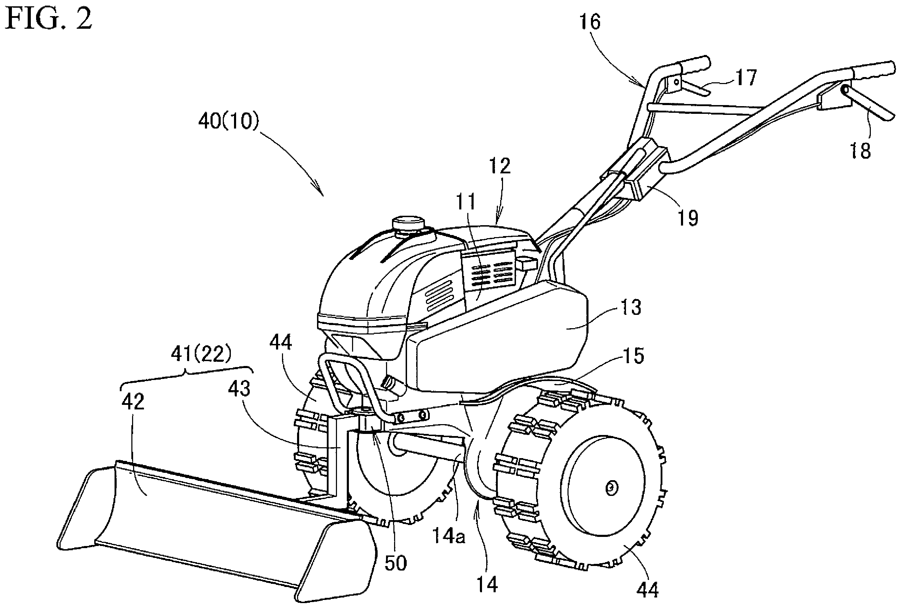

With reference to the Fig. 2, the description is made below. In Fig. 2, a snow removal machine 40 (an operating machine 10) in which a snow removal blade 41 (an operation body 22) is attached to the machine body 12. The snow removal blade 41 includes a blade main body 42 and a blade support part 43 configured to support the blade main body 42. At a rear end of the blade support part 43, a snow removal blade side linkage unit 50 is provided. Regarding details of attachment of the snow removal blade 41 with respect to the machine body 12 will be described later.

The blade support part 43 is in a crank-like shape, and the blade main body 42 is positioned at lower than the machine body side linkage unit 30. At the output shaft 14a of the transmission 14, a right machine body wheel 44 and a left machine body wheel 44 are attached, instead of the cultivating claw 21 (refer to Fig. 1). As other configurations of the snow removal machine 40 are identical to those of the cultivator 20, the identical reference numerals are applied and explanations thereof are omitted.

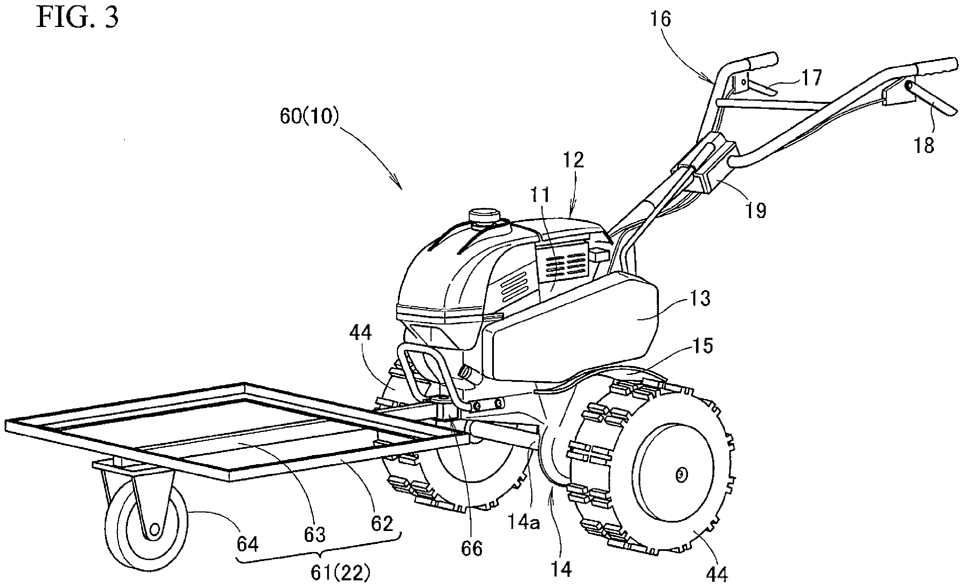

Fig. 3 shows a carrying machine 60 (the operating machine 10) in which the machine body 12 is attached with a carrying table 61 (an operation body 22). The carrying table 61 includes a boxy body 62 on which goods can be placed, a support rod 63 configured to support the boxy body 62, and a carrying wheel 64 provided at a lower portion of a front end of the support rod 63. At a rear end of the support rod 63, a carrying table side linkage unit 61 is provided.

The boxy body 62 is in a frame-like shape, in which a portion of a bottom surface except for a circumferential edge is hollowed out. The support rod 63 is in a rectangular-like shape, supporting a front end and a rear end of the boxy body 62. As other configurations of the carrying machine 60 are identical to those of the snow removal machine 40, the identical reference numerals are applied and explanations thereof are omitted.

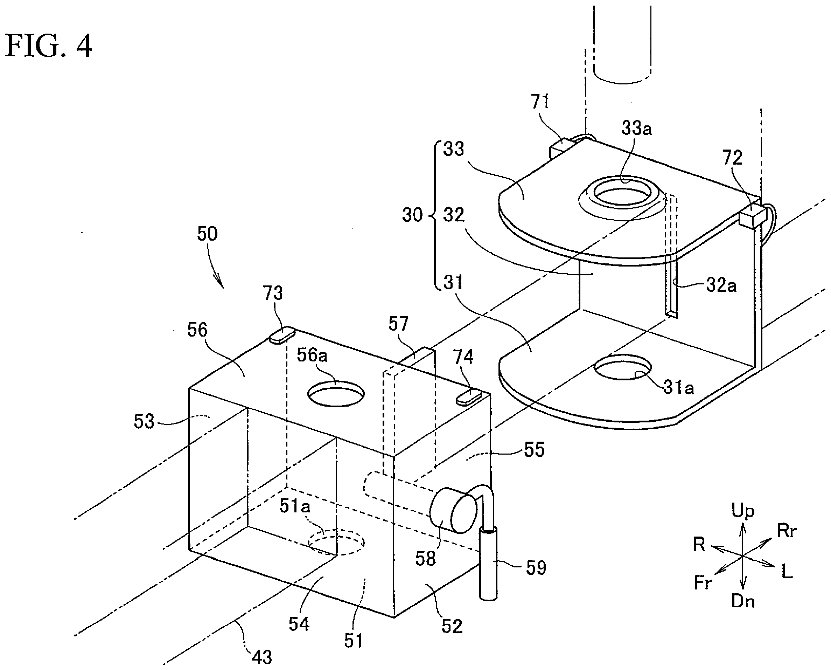

With reference to the Fig. 4, the description is made below. Configurations of the snow removal blade side linkage unit 50 and the machine body side linkage unit 30 is described in the following. The machine body side linkage unit 30 is in a substantially U-like shape, being opened toward a front direction, and includes a lower board part 31, a middle board part 32 standing up from a rear end of the lower board part 31 and an upper board part 33 extending from an upper end of the middle board part 32 in the front direction.

Front ends of the lower board part 31 and the upper board part 33 are curved so as to expand in the front direction. In a center of the lower board part 31, a lower board hole 31 a of a circular shape is formed. Similarly, in a center of the upper board part 33, an upper board hole 33a of a circular shape is formed. On the middle board part 32, an insertion hole 32a in a rectangular-like shape, extending in an up-down direction is formed.

To a right and a left end portions of the upper board part 33, a first switch 71 and a second switch 72 that are proximity sensors are attached. Both of the first switch 71 and the second switch 72 are connected to the control unit 19 (refer to Fig. 1) configured to control the engine 11.

The snow removal blade side linkage unit is described in the following. The snow removal blade side linkage unit 50 is in a hollow rectangular parallelepiped-like shape, and includes: an lower surface part 51; a left side surface part 52 and a right side surface part 53 both extending in a upper direction from a right and a left end portions of the lower surface part 51; a front surface part 54 and a rear surface part 55 both extending in the upper direction from a front and a rear end portions of the lower surface part 51, and an upper surface part 56, covering an upper direction side thereof, is surrounded by the left side surface part 52, the right side surface part 53, the front surface part 54 and the rear surface part 55.

In the lower surface part 51, a lower surface hole 51 a of a circular shape is formed. In the upper surface part 56, a upper surface hole 56a of a circular shape is formed. At a left and a right end portions of the upper surface part 56, a first magnet 73 (a detection object 73) and a second magnet 74 (a detection object 74) are attached. On the rear surface part 55, an insertion board 57 in a rectangular-like shape, extending in a backward direction is formed. The front surface part 54 is joined to the blade support part 43 of the snow removal blade 41. In the left side surface part 52, a rotation body 58, a part of which is positioned inside of the snow removal blade side linkage unit 50 and provided in a rotatable manner as well as a lever 59 for rotating the rotation body 58.

Additionally, at the carrying table side linkage unit 61 (refer to Fig. 3), only the first magnet 73 is attached, while the second magnet 74 is not attached. As other configurations are identical to those of the snow removal blade side linkage unit 50, detailed explanations thereof are omitted.

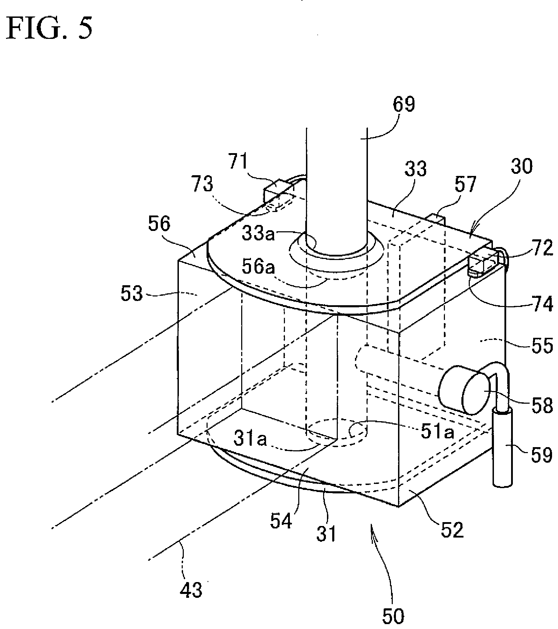

With reference also to the Fig. 5, the description is made below. A linkage between the machine body side linkage unit 30 and the snow removal blade side linkage unit 50 is described in the following. Primarily, the insertion board 57 of the snow removal blade side linkage unit 50 is inserted into the insertion hole 32a (refer to Fig. 4) of the machine body side linkage unit 30. Secondary, a linkage rod 69 is inserted through the upper board hole 33a, the upper surface hole 56a, the lower surface hole 51 a and the a lower board hole 31 a and is latched together with the rotation body 58 inside of the snow removal blade side linkage unit 50. Finally, the linkage rod 69 is fixed by rotating the lever 59, and the machine body side linkage unit 30 and the snow removal blade side linkage unit 50 are linked. For this linkage, known prior art is used. Description of the detailed fixing method inside the snow removal blade side linkage unit 50 is omitted.

When the machine body side linkage unit 30 and the snow removal blade side linkage unit 50 are linked, the first magnet 73 is positioned in a lower direction of the first switch 71, and the second magnet 74 is positioned in the lower direction of the second switch 72.

A linkage between the machine body side linkage unit 30 and a carrying table linkage unit 66 (refer to Fig. 3) is similar thereto, and explanations thereof are omitted.

Hereinafter, functions and effects of the aspect of the present invention are described.

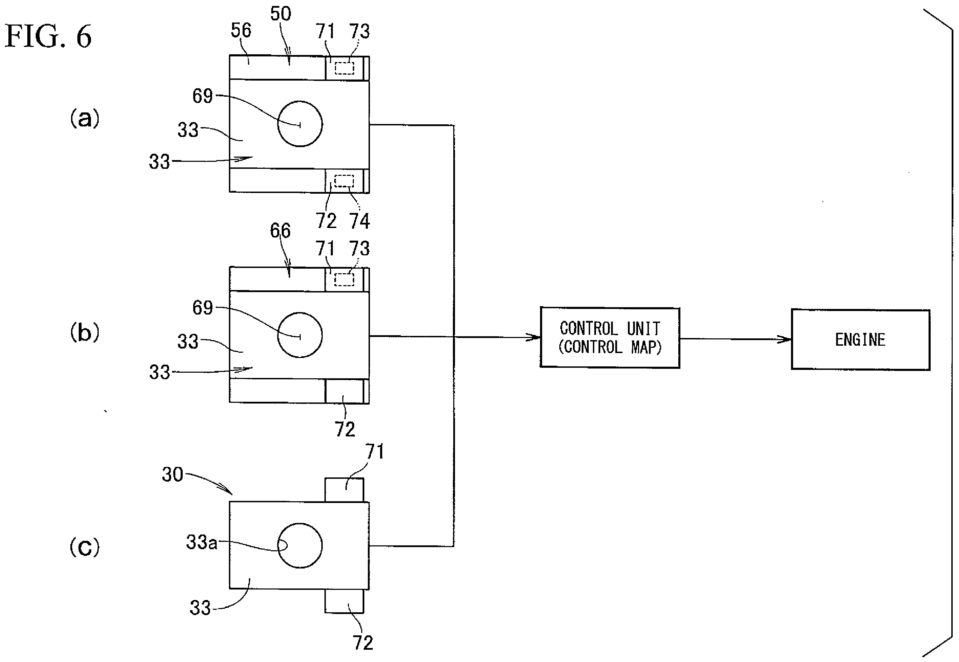

With reference to the Fig. 2 and a part (a) of the Fig. 6, the description is made below. When the snow removal blade 41 is attached to the machine body 12, the first magnet 73 is positioned in the lower direction of the first switch 71, and the second magnet 74 is positioned in the lower direction of the second switch 72. The first switch 71 and the second switch 72 detect the first magnet 73 and the second magnet 74 respectively, and emit a first signal (detection signal) and a second signal (detection signal) respectively.

With reference to the Fig. 3 and a part (b) of the Fig. 6, the description is made below. When the carrying table 61 is attached to the machine body 12, the first magnet 73 is positioned in the lower direction of the first switch 71. The first switch 71 detects the first magnet 73 and emits the first signal. As the second magnet 74 is not attached to the carrying table side linkage unit 61, the second switch 72 does not emit the second signal.

With reference to the Fig. 1 and a part (c) of the Fig. 6, the description is made below. When the cultivating claw 21 is attached to the machine body 12, the machine body side linkage unit 30 is not linked. That is why, either the first signal 71 or the second signal 72 do not detect the first magnet 73 or the second magnet 74, thus neither of them emits signal.

With reference to the Fig. 6, the description is made below. An identification of the operation body 22 by the control unit 19 and a control of the engine 11 are described in the following. The control unit 19 identifies the operation body 22 by a combination of whether detection is made or not of the first signal and the second signal, and controls the engine 11 to be in a characteristic suitable for the operation of one operation body 22.

The control unit 19 has a control map for each of the snow removal blade 41, the carrying table 61 and the cultivating claw 21 (refer to the Fig. 2, Fig. 3 and Fig. 1). The control unit 19 controls an output characteristic of the engine 11 based on the control map. More in details, a throttle opening is adjusted, and a rotation number of the engine (traveling speed) is adjusted.

When the control unit 19 detects the first signal and the second signal, it is determined that the snow removal blade 41 is attached to the machine body 12. The control unit 19 controls the engine 11 to be in the characteristic suitable for snow removal. In a state that an operator hold the speed adjustment lever 17 (refer to Fig. 1) till approximately a half way, a speed of the snow removal machine 40 is configured to be 2 kilometer per hour. In a state that an operator hold the speed adjustment lever 17 till uppermost limit of swing thereof, a speed of the snow removal machine 40 is configured to be 5 kilometer per hour.

### operation body

When the control unit 19 detects only the first signal, it is determined that the carrying table 61 is attached to the machine body 12. The control unit 19 controls the engine 11 to be in the characteristic suitable for carrying. That is to say, a speed range of the carrying machine 60 corresponding to a swing range of the speed adjustment lever 17 is configured to be suitable for carrying.

When the control unit 19 detects neither the first signal nor the second signal, it is determined that the cultivating claw 21 is attached to the machine body 12. The control unit 19 controls the engine 11 to be in the characteristic suitable for cultivating. That is to say, a rotation number range of the cultivating claw 21 corresponding to the swing range of the speed adjustment lever 17 is configured to be suitable for cultivating. In this way, even when the machine body side linkage unit 30 is not linked, it is possible to control the engine 11 to be in the characteristics suitable for the operation.

In the present example, the control unit 19 identifies the operation body 22 by the combination of whether detection is made or not of the first signal and the second signal which the first switch 71 and the second switch 72 emit respectively. That is to say, the control unit 19 is able to identify at most four kind of the operation body 22. Assuming that the sensor is one, a sensor capable of emitting four kind of detection signal is necessary. On the other hand, the present example employs a sensor of two kind of detection signal (a switch with an output of digital format), and enables to reduce the cost of the sensor. It is also possible to increase and decrease the number of sensors depending on the number of the operating bodies.

What is more, plugging and unplugging of a coupler for wiring at a time of replacing an operating body 22 is not necessary. As it is possible to conduct a replacement of the plurality of kind of operating bodies 22 in a simple manner, an operability of the replacement is high. As described above, it is possible to identify the operation body 22 configured to be selected among a plurality of kind thereof in a simple manner and at a low cost.

In addition, a proximity switch (a magnetic switch of noncontact) is used as a sensor is employed, however, a contact method switch may be employed also, for example. In addition, also it may be possible to prepare a plurality of sensors of analog method output, and combining those analog signals to identify the operation body attached to the machine body. In addition, it may be also possible to employ, not an engine, but an electric motor, as a drive source, for example.

That is to say, the scope of the present invention is not limited to the example.

### Industrial Applicability

An operating machine of the aspect of the present invention is preferable for an operating machine of a walking type.

### Reference Numerals

- 10: OPERATING MACHINE
- 11: ENGINE (DRIVE SOURCE)
- 12: MACHINE BODY
- 19: CONTROL UNIT
- 20: CALTIVATOR
- 21: ULTIVATING CLAW (22 OPERATION BODY)
- 40: SNOW REMOVAL MACHINE
- 41: SNOW REMOVAL BLADE (22 OPERATION BODY)
- 60: CARRYING MACHINE
- 61: CARRYING TABLE (22 OPERATION BODY)
- 71: FIRST SWITCH
- 72: SECOND SWITCH
- 73: FIRST MAGNET (DETECTION OBJECT)
- 74: SECOND MAGNET (DETECTION OBJECT)

## Claims

1. An operating machine comprising:
a machine body (12) including a drive source (11);
an operation body (22) configured to be selected among a plurality of kind thereof and configured to be attachable and detachable with respect to the machine body (12) depending on an operation; and
a control unit (19) configured to control the drive source (11),
wherein the machine body (12) includes a plurality of sensors configured to emit detection signal at a time when one operation body (22) selected among the plurality of kind thereof is attached to the machine body (12),
the plurality of kind of operation body (22) includes a detection object configured to be detectable by the plurality of sensors,
the detection object is provided at different position of the operation body (22) depending on the kind of the operation body (22), and
the control unit (19) configured to identify the one operation body (22) in accordance with each detection signal received from the plurality of sensors, and configured to control the drive source (11) to be in a characteristic suitable for an operation of the one operation body (22) based on an identification result.

2. An operating machine according to claim 1,
wherein the control unit (19) is configured to control the drive source (11) to be in a predetermined characteristic in a case where the control unit (19) does not receive the detection signal from the sensors.

3. An operating machine according to claims 1 or 2,
wherein the drive source (11) is an engine, and
the control unit (19) has a control map for each kind of the operation body (22) of the plurality of kind thereof, and configured to control the engine based on the control map.
